# EUROPEAN PATENT APPLICATION

(11) **EP 2 475 137 A2**
(43) Date of publication of application: **11.07.2012**
(21) Application number: 11196100.9
(22) Date of filing: 29.12.2011
(51) Int. Cl.: H04L 12/58

(54) **Method for inviting users to game through chatting in mobile platform**

(30) Priority: 11.01.2011 KR 20110002680
(71) Applicant: NCSoft Corporation, Gangnam-gu, Seoul 135-090 (KR)
(72) Inventor: Oh, Han Jin, 331-210 Chungcheongnam-do (KR); Song, Jun Seo, 431-746 Geyonggi-do (KR); Cho, Jennifer Moon Young, 120-190 Seoul (KR)
(74) Representative: Jansen, Cornelis Marinus

(57) **Abstract**

A method for inviting users to a game through a chatting in a mobile platform is provided. The method may include providing, by a first smartphone, a server with account access information, by accessing the server via a network, the account access information being used to access an account of the mobile platform; permitting, by the server, the first smartphone to access an account of the first smartphone, when the account access information is identical to pre-stored information; providing, by the server, the first smartphone with a smartphone list of smartphones of users registered as friends in the account of the first smartphone, or a game list of games available in the first smartphone; transmitting, by the first smartphone, to the server, information on a smartphone selected by a user of the first smartphone from the smartphone list, or information on a game selected by the user of the first smartphone from the game list; pushing, by the server, a message including an application identifier (ID) of the selected game to a second smartphone selected by the user of the first smartphone; parsing, by the second smartphone, a message received from the first smartphone, the message including the application ID of the selected game, and a message pushed via the server from the second smartphone to the first smartphone, among messages pushed by the server, and displaying the parsed messages on a screen of the second smartphone in a chronological order; and executing, by the second smartphone, the game corresponding to the application ID using a function provided by an Operating System (OS), when the game is already installed in the second smartphone based on selection of the message including the application ID from the screen.

## Description

### CROSS-REFERENCE TO RELATED APPLICATION

This application claims the benefit of Korean Patent Application No. 10-2011-0002680, filed on January 11, 2011, in the Korean Intellectual Property Office, the disclosure of which is incorporated herein by reference.

### BACKGROUND

### 1. Field of the Invention

The present invention relates to a method for inviting smartphone users to a game for smartphones using a social network among the smartphone users.

### 2. Description of the Related Art

Recently, due to expansion of markets of an iPhone Operating System (IOS) and an android OS, smartphones are becoming more and more popular. Various apps for smartphones are being distributed for each platform. Users may buy and install desired apps, so that the apps may be used in various ways, for example gaming, scheduling, multimedia, and the like.

Generally, apps are operated independently of each other. However, recently, a Social Network Service (SNS) is becoming increasingly popular, and new attempts to connect users are being made.

This situation enables the advent of a Social Network Game (SNG) that supports multiplaying by applying the SNS, or that recommends a friend to play a game using a personal network of an existing SNS. Among games for single player, auxiliary services enabling sharing of information among users or displaying a ranking of users are beginning to emerge.

OpenFeint, Plus+, and the like are currently being used as platforms used to provide the services.

The platforms may be understood as combinations of games and social networks.

Conventional SNGs enable a user to optionally add, to his or her game, another user connected via the social network, or to visit a game space of the other user, so that simple interaction may be performed. However, there is a limitation that conventional SNGs are enabled between users having the same games that are already installed.

Additionally, there is another limitation that a user needs to add another user as a friend to play a game together in a separate online community or in offline, separately from the game.

Accordingly, there is a desire for a method that may more closely combine a communication process via a social network with a function such as a function of recommending a game or a function of inviting to a game.

### SUMMARY

According to an aspect of the present invention, there is provided a method for inviting users to a game through a chatting in a mobile platform, including: providing, by a first smartphone, a server with account access information, by accessing the server via a network, the account access information being used to access an account of the mobile platform; permitting, by the server, the first smartphone to access an account of the first smartphone, when the account access information is identical to pre-stored information; providing, by the server, the first smartphone with a smartphone list of smartphones of users registered as friends in the account of the first smartphone, or a game list of games available in the first smartphone; transmitting, by the first smartphone, to the server, information on a smartphone selected by a user of the first smartphone from the smartphone list, or information on a game selected by the user of the first smartphone from the game list; pushing, by the server, a message including an application identifier (ID) of the selected game to a second smartphone selected by the user of the first smartphone; parsing, by the second smartphone, a message received from the first smartphone, the message including the application ID of the selected game, and a message pushed via the server from the second smartphone to the first smartphone, among messages pushed by the server, and displaying the parsed messages on a screen of the second smartphone in a chronological order; and executing, by the second smartphone, the game corresponding to the application ID using a function provided by an operating system (OS), when the game is already installed in the second smartphone based on selection of the message including the application ID from the screen.

The method may further include, after the executing, processing, by the server, the first smartphone and the second smartphone to play the game together.

The method may further include, after the processing: receiving, by the server, messages received and sent between the first smartphone and the second smartphone during execution of the game, and pushing the received messages; parsing, by the first smartphone and the second smartphone, the messages pushed by the server, and displaying the parsed messages on a game screen, during the execution of the game; storing, by the server, the messages received and sent between the first smartphone and the second smartphone during the execution of the game; and providing, by the server, the stored messages to the first smartphone or the second smartphone, when a request to retrieve the stored messages is received from the first smartphone or the second smartphone after the execution of the game is finished.

According to another aspect of the present invention, there is provided a method for inviting users to a game through a chatting in a mobile platform, including: providing, by a first smartphone, a server with account access information, by accessing the server via a network, the account access information being used to access an account of the mobile platform; displaying, by the first smartphone, a chat window with a second smartphone on a screen of the first smartphone, when a user of the first smartphone selects the second smartphone from among smartphones of other users registered as friends; displaying, by the first smartphone, on the chat window in a chronological order, a message sent to the second smartphone via the server, and a message received from the second smartphone via the server; displaying, by the first smartphone, a list of pre-installed games on the screen based on an operation of the user of the first smartphone; and providing, by the first smartphone, the server with information on a selected game so that a message including an application ID of the selected game is pushed to the second smartphone, when the user of the first smartphone selects the game from the list.

According to still another aspect of the present invention, there is provided a method for inviting users to a game through a chatting in a mobile platform, including: executing, by a first smartphone, a pre-installed game based on an operation of a user of the first smartphone; displaying, by the first smartphone, a friend list of other users registered as friends on a screen of the first smartphone, when the user selects a friend invitation function from a screen of the executed game; and transferring, by the first smartphone, to a server, an application ID of the game or information used to specify the game, and identification information of a second smartphone corresponding to a selected user, when the user of the first smartphone selects the user from the friend list.

According to yet another aspect of the present invention, there is provided a method for inviting users to a game through a chatting in a mobile platform, including: displaying, by a second smartphone, a chat window with a first smartphone on a screen of the second smartphone, when a message including identification information of the first smartphone and a game application ID is pushed to the second smartphone; displaying a link associated with the game application ID on the displayed chat window; and executing, by the second smartphone, a game corresponding to the game application ID using a function provided by an OS, when a user selects the link and the game is already installed in the second smartphone.

The method may further include accessing, by the second smartphone, a page used to buy an app for smartphones, or launching an app dedicated to buying an app for smartphones, providing the game application ID as a factor, and displaying, on the screen, a page used to buy the game corresponding to the game application ID, when the game is not installed in the second smartphone.

According to a further aspect of the present invention, there is provided a method for inviting users to a game through a chatting in a mobile platform, including: generating a first message using identification information and message content of a first smartphone and pushing the generated first message to the first smartphone when the identification information and message content of the first smartphone are received from a second smartphone, and generating a second message using identification information and message content of the second smartphone and pushing the generated second message to the second smartphone when the identification information and message content of the second smartphone are received from the first smartphone; and generating a third message and pushing the generated third message so that information regarding a game is displayed in the form of a link on a chat window of the second smartphone, when the identification information of the second smartphone, an application ID of the game, or information used to specify the game are received from the first smartphone.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIG. 1 is a diagram illustrating a network configuration to explain a connection relationship among at least one smartphone, a server, and a push notification server according to the present invention;
FIGS. 2A through 2C are diagrams illustrating examples of a screen to explain an operation of inviting a friend to a game by accessing a social network platform using a smartphone according to the present invention;
FIGS. 3A through 3C are diagrams illustrating examples of a screen to explain an operation of executing a game using a smartphone and inviting a friend to the game according to the present invention;
FIGS. 4A through 4C are diagram illustrating examples of a screen to explain a processing operation of a smartphone invited to a game according to the present invention;
FIG. 5 is a chronological flowchart illustrating a method for inviting users to a game through a chatting in a mobile platform according to the present invention;
FIG. 6 is a flowchart illustrating an operation of selecting a game on a chat window and inviting a friend to the game as illustrated in FIGS. 2A through 2C;
FIG. 7 is a flowchart illustrating an operation of executing a game and inviting a friend to the game as illustrated in FIGS. 3A through 3C;
FIG. 8 is a flowchart illustrating a processing operation after invitation as illustrated in FIGS. 4A through 4C; and
FIG. 9 is a flowchart illustrating the method of FIG. 5, from the perspective of a server.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

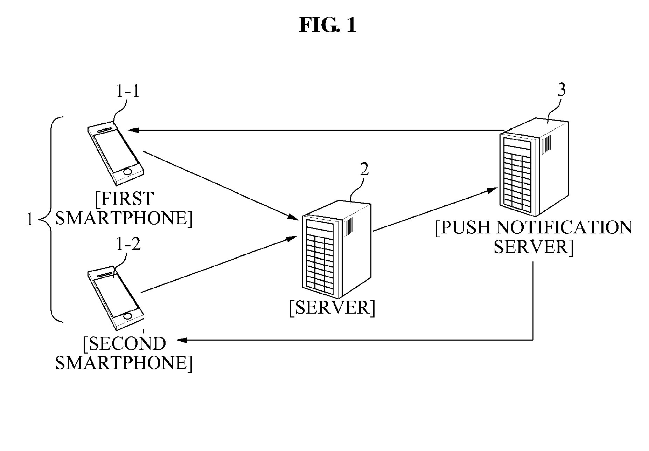

FIG. 1 is a diagram illustrating a network configuration to explain a connection relationship among smartphones, a server, and a push notification server according to the present invention.

In FIG. 1, smartphones 1, for example a first smartphone 1-1 and a second smartphone 1-2, may download a plurality of apps, as well as games, and may install and launch the downloaded apps and games. A part of the apps may interwork with a social network. A server 2 may store and manage networks of users of the smartphones 1, and may provide various services through the networks.

For example, a user of one of the smartphones 1 may register, in advance, users of other smartphones 1 as friends, and may communicate with the registered users via a platform provided by the server 2.

The users of the smartphones 1 may exchange messages with each other, and may receive a variety of data provided from the server 2. An operation of exchanging messages and an operation of receiving data may be performed directly through a communication session between peers, or may be performed by pushing messages using a predetermined scheme that facilitates a communication between smartphones 1 in which apps dedicated to smartphones are not executed.

Accordingly, the server 2 may generate a message to be pushed to the smartphones 1, and may transmit the generated message to a push notification server 3. In other words, pushing may be performed through a communication between the push notification server 3 and the smartphones 1.

Additionally, a network connected among the smartphones 1, the server 2 and the push notification server 3 may include, for example, a third generation (3G) network, or a wireless or wired Internet network.

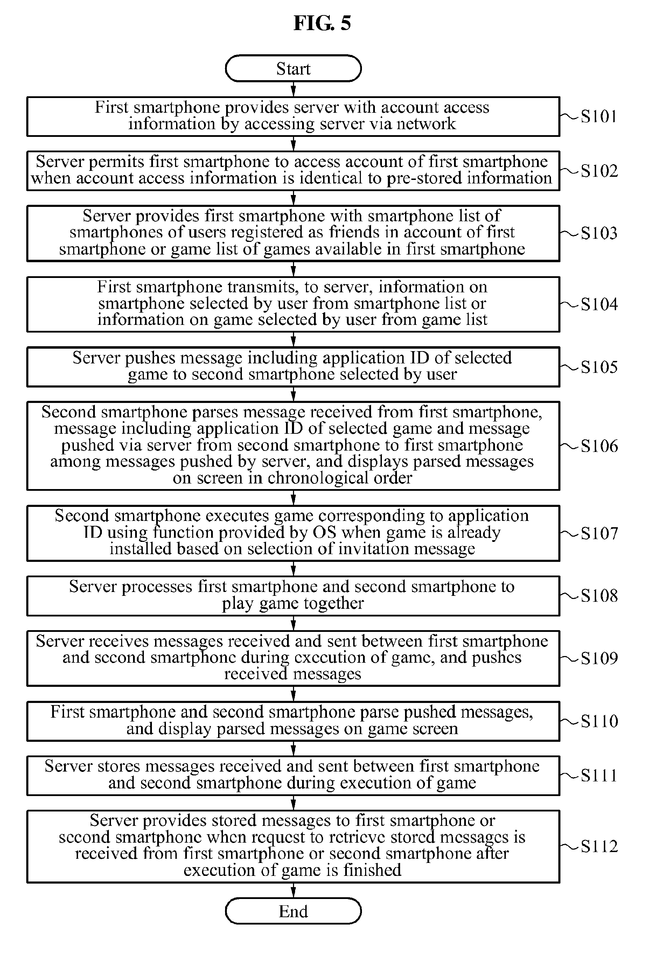

Hereinafter, an operation of inviting users to a game through a chatting among the smartphones 1, the server 2 and the push notification server 3 that are connected to each other will be described with reference to FIG. 5.

FIG. 5 chronologically illustrates a method for inviting users to a game through a chatting in a mobile platform according to the present invention. Referring to FIG. 5, in operation S101, the first smartphone 1-1 may provide the server 2 with account access information, by accessing the server 2 via a network. The account access information may be used to access an account of the mobile platform.

The server 2 may store an account of each of the smartphones 1. Desirably, an account may include information on the other accounts registered as friends.

When an app for an access to the server 2 is launched, the first smartphone 1-1 may provide account access information, so that the server 2 may identify itself. Here, the account access information may include information that a user manually enters, for example, an identifier (ID) and a password. However, the smartphones 1 may provide the account access information to the server 2 by directly withdrawing a pre-stored value, regardless of a user's input, for example a device ID of a smartphone.

When the account access information received from the first smartphone 1-1 is identical to pre-stored information, the server 2 may permit the first smartphone 1-1 to access an account of the first smartphone 1-1 in operation S102.

Here, the expression "accessing an account" is used, however, does not necessarily indicate an access to information stored in the account by inputting a password and an ID. In other words, "accessing an account" may indicate that the server 2 specifies the account of the first smartphone 1-1 using a device ID and processes an access to information stored in a corresponding account.

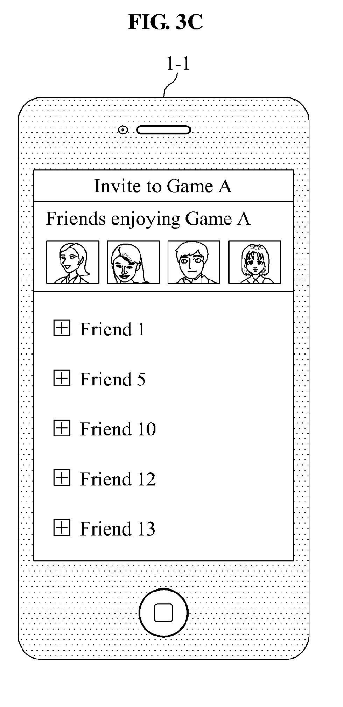

The first smartphone 1-1, accessing the account of the first smartphone 1-1, may receive, from the server 2, an account list of accounts of other smartphones 1 registered as friends of the first smartphone 1-1, and may display the received account list on a screen of the first smartphone 1-1, as shown in FIG. 3C. Additionally, there is no need to receive and update the account list for each access to the server 2.

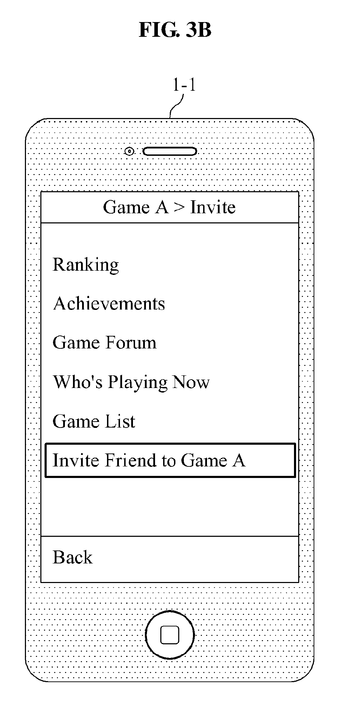

The first smartphone 1-1 may also receive a game list of available games from the server 2, and may display the received game list on the screen of the first smartphone 1-1, as shown in FIG. 3B. However, there is no need to receive the game list separately from the server 2, when a list of games that are already installed in the first smartphone 1-1 is displayed.

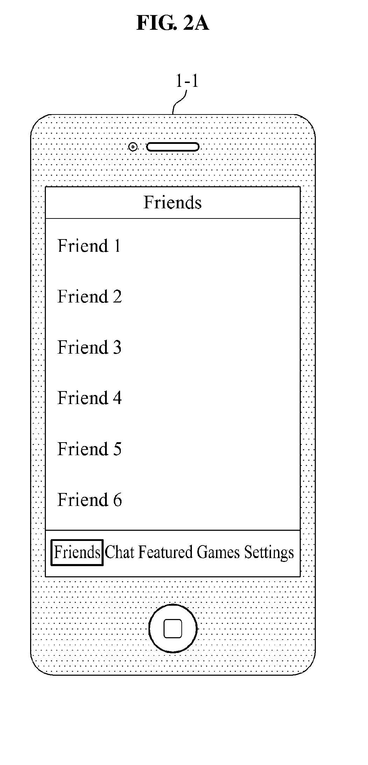

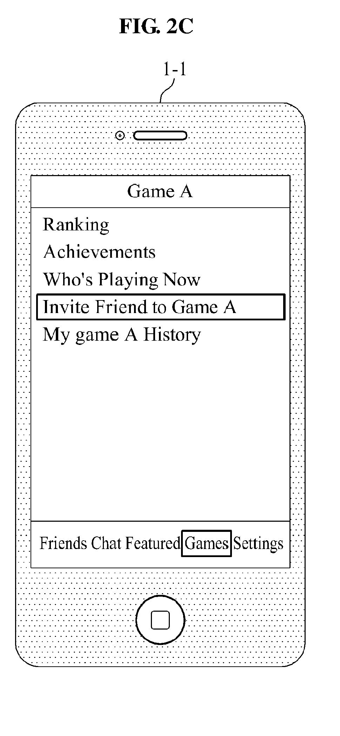

When the account list or the game list is provided from the server 2 in operation S103, a user of the first smartphone 1-1 may determine a friend the user desires to invite and a desired game, as shown in FIGS. 2A through 3C.

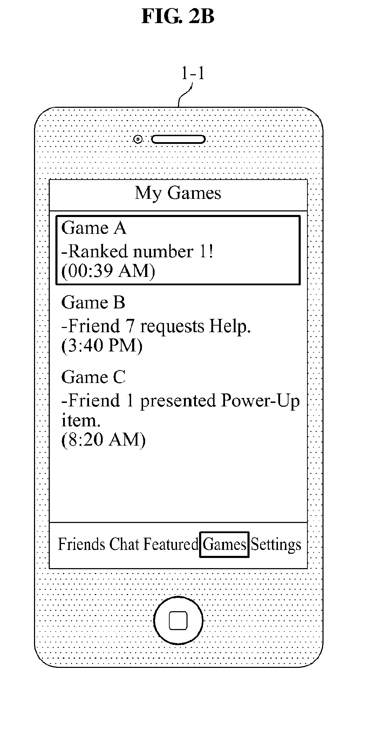

For example, a game may be selected from among games installed in the first smartphone 1-1, as shown in FIG. 2B. Additionally, a friend may be selected from among friends, as shown in FIG. 3C.

When the game and the friend are selected, the first smartphone 1-1 may transmit the selected game and the selected friend to the server 2 in operation S104.

The server 2 may push a message to the second smartphone 1-2, namely, a smartphone of the friend selected by the user of the first smartphone 1-1 from among users registered as friends in the account of the first smartphone 1-1.

Specifically, when information used to identify the second smartphone 1-2 is received from the first smartphone 1-1, the server 2 may withdraw a pre-stored device ID of the second smartphone 1-2. The information used to identify the second smartphone 1-2 may include, for example, a phone number, an e-mail address, an account ID, and the like.

The second smartphone 1-2 may join, in advance, in a platform provided by the server 2, and may have an account. Desirably, during joining, a device ID, namely, a unique value dependent on hardware may be provided to the server 2. The server 2 may store the provided device ID, and may withdraw the device ID when generating a message to be sent to the second smartphone 1-2.

Information that is used to identify the selected game and that is provided from the first smartphone 1-1 to the server 2 may include a title, a file size, a path and a version of the selected game and the like, and desirably may be an application ID assigned to each app for smartphones.

The application ID may be a value defined by a predetermined data structure, and may desirably be assigned to each of apps for smartphones. Accordingly, the smartphones 1 and the server 2 may specify apps using application IDs only.

When the information used to identify the game selected by the user of the first smartphone 1-1 is received, the server 2 may search for an application ID corresponding to the received information, and may include the application ID in message content to be sent to the second smartphone 1-2.

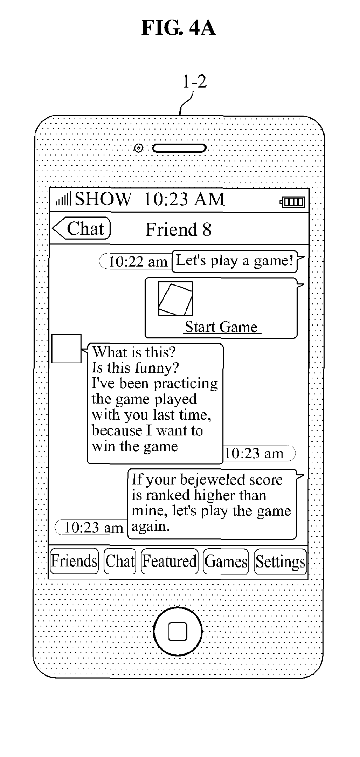

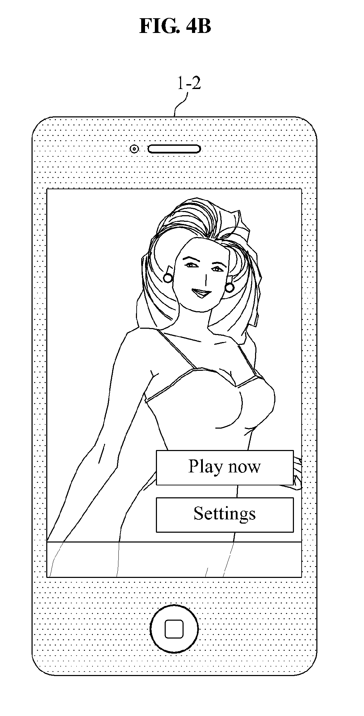

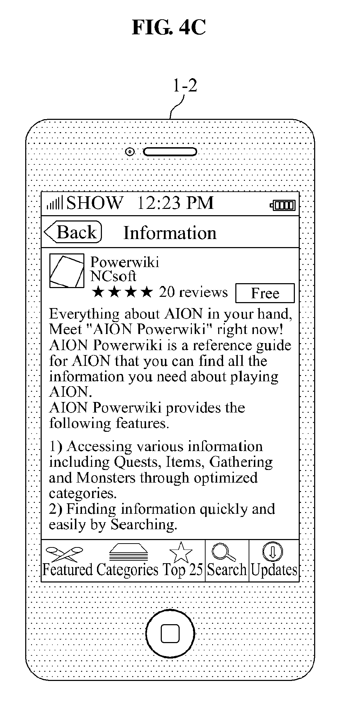

Desirably, as shown in FIG. 4A, message content may be processed so that an icon or image of a corresponding game may be displayed on a chat window of the second smartphone 1-2. The message content may further include, for example, a phrase "Gildong HONG has invited" in the form of text.

When message content including the application ID of the game is generated, the server 2 may generate a message by combining the generated content with the device ID of the second smartphone 1-2, and may transmit the generated message to the push notification server 3, so that a pushing operation may be performed in operation S105.

When the second smartphone 1-2 receives the message by accessing the push notification server 3, the pushing operation may be completed.

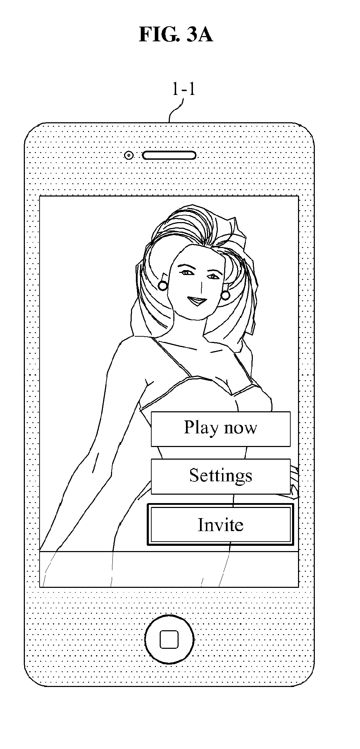

When the message is pushed, the second smartphone 1-2 may display the message on a chat window on which chat content with the first smartphone 1-1 is displayed, as shown in FIG. 3A.

The expression "chatting" is used herein, however, does not necessarily indicate that chatting is performed in real time when a session is connected, unlike instant messengers for Personal Computer (PC). A Short Message Service (SMS) enabling exchange of short text messages may be displayed on a chat window, as shown in FIG. 4A. SMS apps employing the form of a chat window have been widespread, and may display, in the form of chatting, messages exchanged in non-real time and intermittently.

Accordingly, in operation S106, the second smartphone 1-2 may display the received message on a chat window with the first smartphone 1-1. Here, there is no need to chat with the first smartphone 1-1 in real time.

When the chat window with the first smartphone 1-1 is displayed on a screen based on an operation of a user of the second smartphone 1-2, the second smartphone 1-2 may display, in a chronological order, the message received in operation S105, together with chat content with the first smartphone 1-1 before and after the message.

As shown in FIG. 4A, the chat content with the first smartphone 1-1 may be displayed before and after the message including the application ID of the game is received in operation S105.

Referring to FIG. 4A, it can be found that the message including the application ID of the game may be displayed with a game icon together with a link such as "Start Game" link. The second smartphone 1-2 may parse the received message and display the parsed message in a predefined form.

When the message including the application ID of the game is displayed in the form of a link, the user may select the link by touching a touch screen of the second smartphone 1-2.

When the link is selected, the second smartphone 1-2 may call a function provided by an Operating System (OS) of a smartphone using the application ID as a factor, and may attempt to execute a game corresponding to the application ID in operation S107.

When the game corresponding to the application ID is already installed, a screen of FIG. 3A may be changed to a screen of FIG. 3B, and the game may be executed.

When the same game is launched by the first smartphone 1-1 and the second smartphone 1-2, the first smartphone 1-1 and the second smartphone 1-2 may access the server 2 to play the game together.

The server 2 may process the first smartphone 1-1 and the second smartphone 1-2 to play the game together in operation S108.

Here, the expression "playing the game together" does not necessarily indicate multiplayer gaming, and may include a connection of respective game spaces, for example a social network game (SNG).

Accordingly, the first smartphone 1-1 and the second smartphone 1-2 may enjoy the game together through the server 2, even in a remote place.

Additionally, a game app may support chatting during the game.

Specifically, when the user of the first smartphone 1-1 and the user of the second smartphone 1-2 have a conversation with each other, the server 2 may push the conversation in the form of messages to the first smartphone 1-1 and the second smartphone 1-2 in operation S109.

The first smartphone 1-1 and the second smartphone 1-2 may parse the received massages, and may overlay and display the parsed messages on a game screen in operation S110.

Content of chatting during the game may also be understood as part of interworking with a social network. The content may desirably be stored and shared by the user of the first smartphone 1-1 and the user of the second smartphone 1-2.

However, when chatting is performed between the first smartphone 1-1 and the second smartphone 1-2 as shown in FIG. 4A, a log may be stored in the platform or in a local of the smartphones 1, and accordingly no problem may occur. Instead, since the chatting is performed on the game app, separate measures may be required.

In particular, since game apps are mainly manufactured independently of the platform provided by the server 2, the server 2 may store conversation between the first smartphone 1-1 and the second smartphone 1-2 during the game in operation S111.

The first smartphone 1-1 and the second smartphone 1-2 may send, to the server 2, a request to retrieve conversation exchanged during the game, after the game is finished. Here, the server 2 may provide pre-stored messages to the smartphones 1 that send a retrieval request in operation S112.

In operation S107, it is assumed that the game corresponding to the application ID is installed. However, when the game is not installed, the execution of the game may be failed.

Specifically, when the game is not installed, the second smartphone 1-2 may access a page used to buy an app for smartphones, or launch an app dedicated to buying an app for smartphones, and may provide the application ID as a factor in operation S113.

When the application ID is provided as a factor, an access to a page used to buy a corresponding game may be enabled, and accordingly the second smartphone 1-2 may display the page on the screen.

The user of the second smartphone 1-2 may buy the game from the displayed page, and may install the game in the second smartphone 1-2. Subsequently, the game may be executed, and operation S108 may be performed.

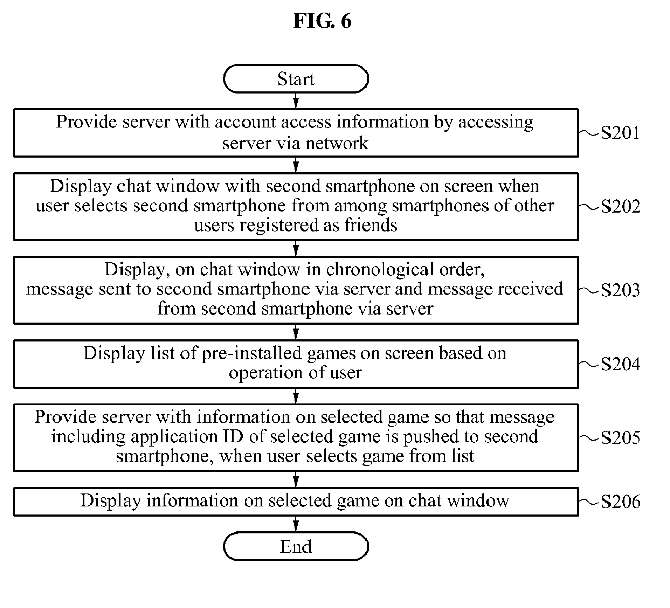

Hereinafter, an operation of selecting a game from a chat window and inviting a friend to the game using the first smartphone 1-1 will be described with reference to FIGS. 2A through 2C and 6.

In operation S201, the first smartphone 1-1 may provide the server 2 with account access information, by accessing the server 2 via a network based on an operation of the user. The account access information may be used to access an account of the mobile platform.

For example, several function taps, for example, "Friends," "Chat," "Featured," "Games," and "Settings" may be displayed on a lower portion of the screen of the first smartphone 1-1 accessing the server 2, as shown in FIG. 2A.

The user may select the "Chat" tap, and may chat with users of the other smartphones 1 registered as friends.

When a friend is selected from a friend list as shown in FIG. 2A, the first smartphone 1-1 may display, on the screen, a chat window with the second smartphone 1-2, namely a smartphone corresponding to the selected friend, as shown in FIG. 4A in operation S202.

In operation S203, the first smartphone 1-1 may display, on the chat window in a chronological order, a message sent via the server 2 to the second smartphone 1-2 and a message received via the server 2 from the second smartphone 1-2.

When the user selects the "Games" tap, the first smartphone 1-1 may display, on the screen, a game list of games that are installed in advance in the first smartphone 1-1, as shown in FIG. 2B, in operation S204.

The games of the game list installed in the first smartphone 1-1 may be limited to games interworking with the platform provided by the server 2.

When the user selects a game from the displayed game list, the first smartphone 1-1 may provide the server 2 with information used to identify the selected game in operation S205. The information used to identify the game may desirably include an application ID of the game.

When the user of the first smartphone 1-1 selects a game and a friend as described above, an invitation message may be pushed via the server 2 to the second smartphone 1-2, so that the invitation message may be displayed on a chat window of the second smartphone 1-2.

Also, the invitation message may be displayed on the chat window of the first smartphone 1-1, as shown in FIG. 4A, in operation S206.

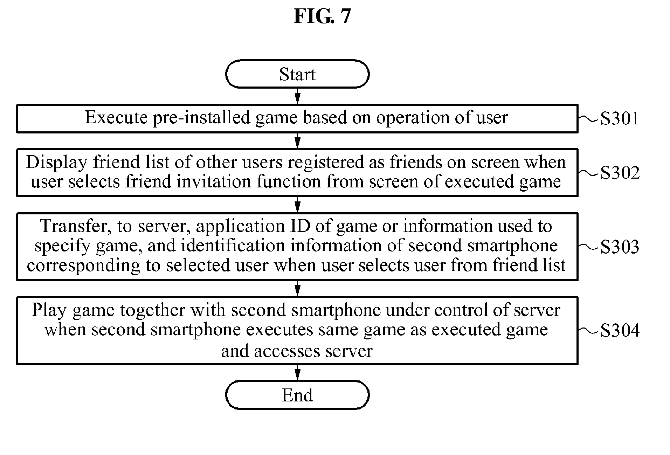

Hereinafter, an operation by which the first smartphone 1-1 invites a friend after executing a game will be described with reference to FIGS. 3A through 3C and 7.

Unlike the embodiment of FIGS. 2A through 2C and 6, the user of the first smartphone 1-1 may launch a game app, and may then execute a function module of the game app interworking with the platform of the server 2, to invite a friend.

In operation S301, the first smartphone 1-1 may execute the pre-installed game based on the operation of the user, as shown in FIG. 3A.

When the user selects a friend invitation function from a screen of the executed game, as shown in FIG. 3B, the first smartphone 1-1 may display, on the screen, a friend list of other users registered as friends in operation S302.

When the user selects a user from the displayed friend list, the first smartphone 1-1 may transfer, to the server 2, an application ID of the executed game, and identification information of the second smartphone 1-2, namely, a smartphone corresponding to the selected user in operation S303.

Accordingly, the invitation message may be pushed to the second smartphone 1-2, as shown in FIG. 4A.

When the second smartphone 1-2 executes the same game and accesses the server 2, in response to the invitation message, the first smartphone 1-1 may play the game together with the second smartphone 1-2 under the control of the server 2 in operation S304.

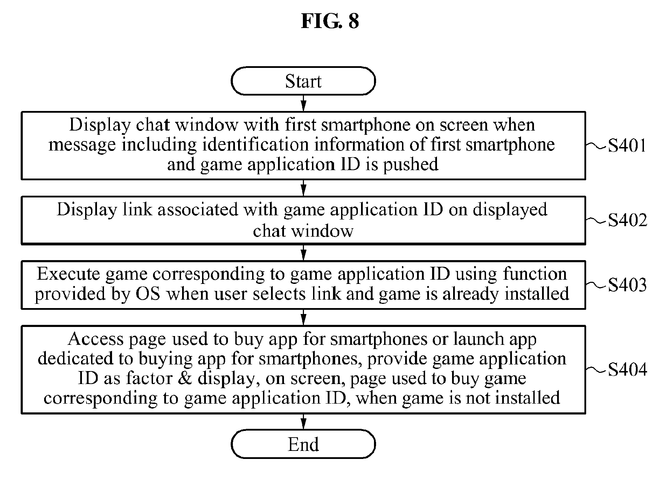

Hereinafter, an operation by which the second smartphone 1-2 accepts an invitation will be described with reference to FIGS. 4A through 4C and 8.

In operation S401, the second smartphone 1-2 may display the chat window with the first smartphone 1-1 based on the operation of the user of the second smartphone 1-2. Here, a message including the identification information of the first smartphone 1-1 and a game application ID may be pushed to the second smartphone 1-2.

In operation S402, the "Start Game" link and game icon associated with the game application ID may be displayed, as shown in FIG. 4A.

When the user of the second smartphone 1-2 selects the link, and when a game corresponding to the game application ID is already installed, the second smartphone 1-2 may execute the game using a function provided by an OS in operation S403.

Conversely, when the game is not installed, the second smartphone 1-2 may access a page used to buy an app for smartphones or launch an app dedicated to buying an app for smartphones, may provide the application ID as a factor, and may display, on the screen, a page used to buy the game corresponding to the application ID in operation S404.

The user may buy the game from the displayed page, and may install the game.

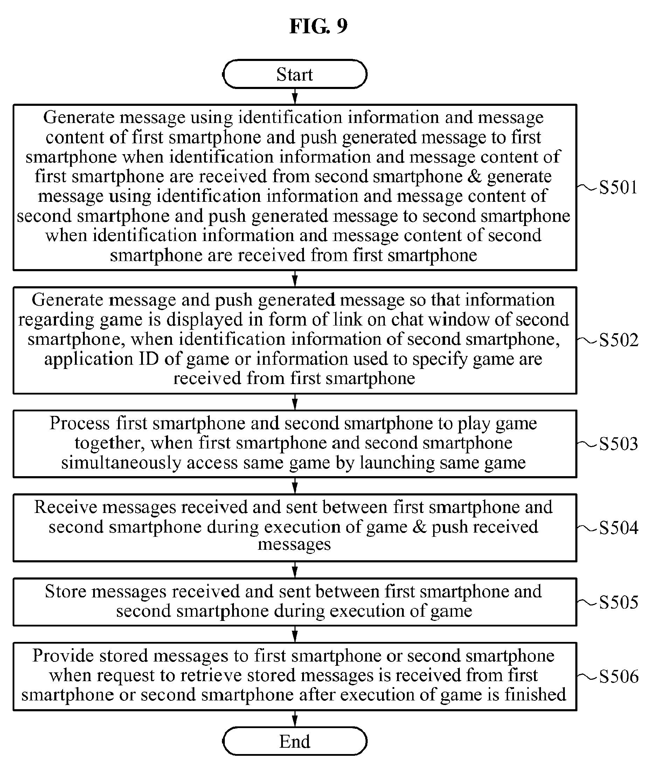

Hereinafter, the method for inviting users to a game through a chatting in a mobile platform according to the present invention will be described from the perspective of the server 2 with reference to FIG. 9.

In operation S501, the server 2 may generate messages with chat content between the first smartphone 1-1 and the second smartphone 1-2, and may transfer the generated messages.

Specifically, when identification information and message content of the second smartphone 1-2 are received from the first smartphone 1-1, a message may be generated using the identification information and message content of the second smartphone 1-2, and may be transferred to the push notification server 3, so that pushing may be performed to the second smartphone 1-2. Similarly, pushing may be performed to the first smartphone 1-1.

When the identification information of the second smartphone 1-2 and a game application ID are received from the first smartphone 1-1, a message may be generated by combining the received identification information with the received game application ID, and the generated message may be transferred to the push notification server 3, so that pushing may be performed to the second smartphone 1-2 in operation S502.

Accordingly, the "Game Start" link may be displayed together with the game icon on the chat window on the screen of the second smartphone 1-2 that receives a game invitation message, as shown in FIG. 4A.

Subsequently, when the first smartphone 1-1 and the second smartphone 1-2 individually access the server 2 by executing the same game corresponding to the application ID, the server 2 may process the first smartphone 1-1 and the second smartphone 1-2 to play the game together in operation S503.

The expression "playing the game together" is used herein, however, there is no limitation to a classical multiplayer gaming such as a conventional online game. Additionally, the expression "executing the game together" may include connecting users in their respective game spaces, for example an SNG.

When the first smartphone 1-1 and the second smartphone 1-2 chat with each other while playing the game, the server 2 may receive content received and sent between the first smartphone 1-1 and the second smartphone 1-2, may generate messages, and may push the generated messages in operation S504.

When chatting is performed during the game, the server 2 may store the messages in operation S505.

Subsequently, when a request to retrieve the stored messages is received from the first smartphone 1-1 and the second smartphone 1-2 after the game is finished, the server 2 may provide the stored messages to the smartphones 1 that send a retrieval request in operation S506.

As described above, the method for inviting users to a game through a chatting in a mobile platform according to the present invention may be recorded in computer-readable media manufactured in the form of computer programs, and may be performed in the smartphones 1 or the server 2.

Additionally, the term "server 2" has been used herein, however does not necessarily indicate a target configured with single hardware, and should be understood to include a collection of server groups interworking with the smartphones 1.

Conventionally, to play a game in offline space or separate online space, users need to individually install the game and to be registered with each other. However, according to the present invention, a user may invite another user to a game through a chat window, and thus it is possible to simply play a game together.

Additionally, when an invited user simply selects a link displayed on a chat window, a game may be automatically executed, so that users may play the game together. Furthermore, even when the game is not installed, a page used to buy the game may be automatically connected, and thus it is possible to buy the game from the displayed page and install the game to play the game together.

Hence, it is possible to maximize synergy by interworking between a social network and a game for smartphones.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A method for inviting users to a game through a chatting in a mobile platform, the method comprising:
providing, by a first smartphone, a server with account access information, by accessing the server via a network, the account access information being used to access an account of the mobile platform;
permitting, by the server, the first smartphone to access an account of the first smartphone, when the account access information is identical to pre-stored information;
providing, by the server, the first smartphone with a smartphone list of smartphones of users registered as friends in the account of the first smartphone, or a game list of games available in the first smartphone;
transmitting, by the first smartphone, to the server, information on a smartphone selected by a user of the first smartphone from the smartphone list, or information on a game selected by the user of the first smartphone from the game list;
pushing, by the server, a message including an application identifier (ID) of the selected game to a second smartphone selected by the user of the first smartphone;
parsing, by the second smartphone, a message received from the first smartphone, the message including the application ID of the selected game, and a message pushed via the server from the second smartphone to the first smartphone, among messages pushed by the server, and displaying the parsed messages on a screen of the second smartphone in a chronological order; and
executing, by the second smartphone, the game corresponding to the application ID using a function provided by an Operating System (OS), when the game is already installed in the second smartphone based on selection of the message including the application ID from the screen.

2. The method of claim 1, further comprising, after the executing:
processing, by the server, the first smartphone and the second smartphone to play the game together.

3. The method of claim 2, further comprising, after the processing:
receiving, by the server, messages received and sent between the first smartphone and the second smartphone during execution of the game, and pushing the received messages;
parsing, by the first smartphone and the second smartphone, the messages pushed by the server, and displaying the parsed messages on a game screen, during the execution of the game;
storing, by the server, the messages received and sent between the first smartphone and the second smartphone during the execution of the game; and
providing, by the server, the stored messages to the first smartphone or the second smartphone, when a request to retrieve the stored messages is received from the first smartphone or the second smartphone after the execution of the game is finished.

4. The method of claim 1, further comprising, after the executing:
accessing, by the second smartphone, a page used to buy an app for smartphones, or launching an app dedicated to buying an app for smartphones, providing the application ID as a factor, and displaying, on the screen, a page used to buy the game corresponding to the application ID, when the game is not installed in the second smartphone.

5. A method for inviting users to a game through a chatting in a mobile platform, the method comprising:
providing, by a first smartphone, a server with account access information, by accessing the server via a network, the account access information being used to access an account of the mobile platform;
displaying, by the first smartphone, a chat window with a second smartphone on a screen of the first smartphone, when a user of the first smartphone selects the second smartphone from among smartphones of other users registered as friends;
displaying, by the first smartphone, on the chat window in a chronological order, a message sent to the second smartphone via the server, and a message received from the second smartphone via the server;
displaying, by the first smartphone, a list of pre-installed games on the screen based on an operation of the user of the first smartphone; and
providing, by the first smartphone, the server with information on a selected game so that a message including an application identifier (ID) of the selected game is pushed to the second smartphone, when the user of the first smartphone selects the game from the list.

6. The method of claim 5, further comprising, after the providing of the information on the selected game:
displaying, by the first smartphone, the information on the selected game on the chat window.

7. A method for inviting users to a game through a chatting in a mobile platform, the method comprising:
executing, by a first smartphone, a pre-installed game based on an operation of a user of the first smartphone;
displaying, by the first smartphone, a friend list of other users registered as friends on a screen of the first smartphone, when the user selects a friend invitation function from a screen of the executed game; and
transferring, by the first smartphone, to a server, an application identifier (ID) of the game or information used to specify the game, and identification information of a second smartphone corresponding to a selected user, when the user of the first smartphone selects the user from the friend list.

8. The method of claim 7, further comprising, after the transferring:
playing, by the first smartphone, the game together with the second smartphone under a control of the server, when the second smartphone executes a same game as the executed game and accesses the server.

9. A method for inviting users to a game through a chatting in a mobile platform, the method comprising:
displaying, by a second smartphone, a chat window with a first smartphone on a screen of the second smartphone, when a message including identification information of the first smartphone and a game application identifier (ID) is pushed to the second smartphone;
displaying a link associated with the game application ID on the displayed chat window; and
executing, by the second smartphone, a game corresponding to the game application ID using a function provided by an Operating System (OS), when a user selects the link and the game is already installed in the second smartphone.

10. The method of claim 9, further comprising, after the executing:
accessing, by the second smartphone, a page used to buy an app for smartphones, or launching an app dedicated to buying an app for smartphones, providing the game application ID as a factor, and displaying, on the screen, a page used to buy the game corresponding to the game application ID, when the game is not installed in the second smartphone.

11. A method for inviting users to a game through a chatting in a mobile platform, the method comprising:
generating a first message using identification information and message content of a first smartphone and pushing the generated first message to the first smartphone when the identification information and message content of the first smartphone are received from a second smartphone, and generating a second message using identification information and message content of the second smartphone and pushing the generated second message to the second smartphone when the identification information and message content of the second smartphone are received from the first smartphone; and
generating a third message and pushing the generated third message so that information regarding a game is displayed in the form of a link on a chat window of the second smartphone, when the identification information of the second smartphone, an application identifier (ID) of the game, or information used to specify the game are received from the first smartphone.

12. The method of claim 11, further comprising, after the generating of the third message:
processing the first smartphone and the second smartphone to play the game together, when the first smartphone and the second smartphone simultaneously access the same game by launching the same game.

13. The method of claim 12, further comprising, after the processing:
receiving messages received and sent between the first smartphone and the second smartphone during execution of the game, and pushing the received messages;
storing the messages received and sent between the first smartphone and the second smartphone during the execution of the game; and
providing the stored messages to the first smartphone or the second smartphone, when a request to retrieve the stored messages is received from the first smartphone or the second smartphone after the execution of the game is finished.

14. A non-transitory computer readable recording medium storing a program to cause a computer to implement the method of claim 1.
